(19)

Europäisches
Patentamt
European
Patent Office
Office européen
des brevets

(11) **EP 4 641 816 A1**

(12) **EUROPEAN PATENT APPLICATION**
published in accordance with Art. 153(4) EPC

(43) Date of publication:
**29.10.2025 Bulletin 2025/44**

(21) Application number: **23929056.2**

(22) Date of filing: **24.03.2023**

(51) International Patent Classification (IPC):
*H01M 50/536* (2021.01)     *H01M 50/538* (2021.01)

(52) Cooperative Patent Classification (CPC):
**H01M 50/213; H01M 10/0587; H01M 50/107;
H01M 50/503; H01M 50/536; H01M 50/538;**
H01M 2220/20; Y02E 60/10; Y02P 70/50

(86) International application number:
**PCT/CN2023/083685**

(87) International publication number:
**WO 2024/197452 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Hong Kong (HK)**

(72) Inventors:
• **ZHAO, Fenggang**
  **Ningde, Fujian 352100 (CN)**
• **JIN, Haizu**
  **Ningde, Fujian 352100 (CN)**
• **CHAI, Zhisheng**
  **Ningde, Fujian 352100 (CN)**

(74) Representative: **Gong, Jinping
CocreateIP
Neumarkter Straße 21
81673 München (DE)**

(54) **BATTERY CELL, BATTERY, AND ELECTRICAL DEVICE**

(57)     A battery cell, a battery, and an electrical device. The battery cell (40) comprises: an electrode assembly (10) comprising a plurality of electrode sheets (10a, 10b) and separators (10c) provided between adjacent electrode sheets (10a, 10b) having opposite polarities among the plurality of electrode sheets (10a, 10b), the plurality of electrode sheets (10a, 10b) and the separators (10c) being wound in a winding direction (wd) and forming a wound structure (100), wherein at least one of the plurality of electrode sheets (10a, 10b) comprises a current collector substrate (11) and a plurality of tabs (13), the plurality of tabs (13) are connected to at least one side edge of the current collector substrate (11) extending in the winding direction (wd), and arranged at intervals in the winding direction (wd), and at least part of the plurality of tabs (13) is bent toward a direction close to a winding axis (CL) of the wound structure (100), and forms a tab stack structure (130) at an end portion of the wound structure (100); a shell (4A) having a chamber for accommodating the electrode assembly (10); an electrode terminal (42) provided on a wall portion of the shell (4A); and conductive members (21, 22) welded to the tab stack structure (130) and electrically connected to the electrode terminal (42).

EP 4 641 816 A1

**FIG. 7**

## Description

### TECHNICAL FIELD

The present disclosure relates to the technical field of batteries, and in particular, to a battery cell, a battery, and an electrical device.

### BACKGROUND

Secondary batteries, especially lithium-ion batteries, have the advantages of high voltage, large specific energy, long cycle life, green and pollution-free, wide operating temperature range, small self-discharge, etc. They are widely used in portable electronic devices and power devices of large-scale new energy electric vehicles, and are of great significance to solving human environmental pollution and energy crisis. With the widespread application of lithium-ion batteries, the safety of battery usage has become an issue that users pay close attention to.

### SUMMARY OF THE INVENTION

In an aspect of the present disclosure, a battery cell is provided, comprising:

> an electrode assembly comprising a plurality of electrode sheets and separators provided between adjacent electrode sheets having opposite polarities among the plurality of electrode sheets, the plurality of electrode sheets and the separators being wound in a winding direction and forming a wound structure, at least one of the plurality of electrode sheets comprising a current collector substrate and a plurality of tabs, the plurality of tabs being connected to at least one side edge of the current collector substrate extending in the winding direction, and being arranged at intervals in the winding direction, and at least part of the plurality of tabs being bent toward a direction close to a winding axis of the wound structure, and forming a tab stack structure at an end portion of the wound structure,
> a shell having a chamber for accommodating the electrode assembly;
> an electrode terminal provided on a wall portion of the shell; and
> conductive members welded to the tab stack structure and electrically connected to the electrode terminal.

The conductive members are electrically connected to the electrode terminal disposed on the wall portion of the shell, and are welded to the plurality of tabs of the electrode assembly stacked at the end portion of the wound structure, so that the stacked multi-layer tab structure has higher thickness and is not easy to be welded through when being welded to the conductive members, so as to avoid the risk of short circuit caused by burns on the structures such as the separator film or the tab in the electrode assembly during welding, thereby improving the welding quality of the welding area, reducing the short circuit risk of the battery cell and improving the use safety.

In some embodiments, the tab stack structure includes a first tab stack area and a second tab stack area arranged from outside to inside in a direction close to the winding axis, the number of tab stack layers in the first tab stack area increases in the direction close to the winding axis, the number of the tab stack layers in the second tab stack area is equal in the direction close to the winding axis, and at least a part of a welding area between the conductive members and the tab stack structure is located in the second tab stack area.

The number of the tab stack layers in the second tab stack area is equal in the direction close to the winding axis. Therefore, when the conductive member is welded to the tab stack structure formed at the end portion of the wound structure, the second tab stack area has more tab stack layers and a higher stack thickness than other tab stack areas. Therefore, it is not easy to be welded through when being welded to the conductive member, thereby improving the welding quality of the welding area and reducing the risk of short circuit caused by burns on the separator film or the electrode sheet during welding.

In some embodiments, the welding area includes a first portion located in the second tab stack area and a second portion located in the first tab stack area.

By welding the second tab stack area and the first tab stack area to the conductive members through the first portion and the second portion of the welding area respectively, the overall size of the welding area can be increased, thereby improving the welding strength, reducing the resistance of the welding area, and thus reducing the risk of overcurrent.

In some embodiments, the tab stack structure further includes a third tab stack area located on a side of the second tab stack area adjacent to the winding axis, and the welding area further includes a third portion located in the third tab stack area.

By welding the third tab stack area to the conductive member, the overall size of the welding area can be increased, thereby improving the welding strength, reducing the resistance of the welding area, and thus reducing the risk of overcurrent.

In some embodiments, a ratio S1/S of an area S1 of the first portion to an area S of the welding area satisfies: $S1/S \geq 70\%$.

By having the ratio S1/S greater than or equal to 70%, the welding quality of the welding area can be improved and the risk of welding through or false welding of the tab can be reduced.

In some embodiments, the ratio S1/S of the area S1 of the first portion to the area S of the welding area satisfies: $S1/S \geq 90\%$.

By further defining the ratio S1/S to be greater than or equal to 90%, the welding quality of the welding area can be further improved and the risk of tab welding through or false welding of the tab can be effectively reduced.

In some embodiments, the wound structure is a cylindrical wound structure, and a ratio L1/L of a maximum radial length L1 of the first portion in the radial direction of the cylindrical wound structure to a maximum radial length L of the welding area in the radial direction of the cylindrical wound structure satisfies: L1/L ≥ 70%.

By having the ratio L1/L greater than or equal to 70%, the welding quality of the welding area can be improved and the risk of welding through or false welding of the tab can be reduced.

In some embodiments, the ratio L1/L of the maximum radial length L1 of the first portion in the radial direction of the cylindrical wound structure to the maximum radial length L of the welding area in the radial direction of the cylindrical wound structure satisfies: L1/L ≥ 90%.

By further defining the ratio L1/L to be greater than or equal to 90%, the welding quality of the welding area can be further improved and the risk of welding through or false welding of the tab can be effectively reduced.

In some embodiments, a minimum distance d between the winding start end of the current collector substrate in the winding direction and a second tab satisfies: d ≤ 1200 mm;

where the second tab is defined as the tab that is welded to the conductive member and is closest to the winding start end among the plurality of tabs.

By having the minimum distance d less than or equal to 1200 mm, the range of the tab directly connected to the conductive member through the welding area can be increased, and the risk of overcurrent in the second tab can be reduced, thereby minimizing overheating of the tab, which affects the properties of the chemical substances in the electrode assembly.

In some embodiments, the minimum distance d satisfies: d ≤ 800 mm.

By further defining the minimum distance d to be less than or equal to 800 mm, the range of the tab directly connected to the conductive member through the welding area can be increased to a greater extent, and the risk of overcurrent in the first tab can be further reduced, thereby more effectively preventing overheating of the tab, which affects the properties of the chemical substances in the electrode assembly.

In some embodiments, in the extension direction of the winding axis, a maximum value Hmax of a depth H of the welding area between the conductive member and the tab stack structure and a thickness t of the conductive member satisfy: 1.5*t ≤ Hmax ≤ 1.9*t.

By setting a specific range for the ratio of the maximum value Hmax of the depth of the welding area to the thickness t of the conductive member, the risk of welding through and false welding of the tab can be minimized.

In some embodiments, in the extension direction of the winding axis, the maximum value Hmax of the depth H of the welding area and the thickness t of the conductive member satisfy: 1.6*t ≤ Hmax ≤ 1.8*t.

By further defining an optional range for the ratio of the maximum value Hmax of the depth of the welding area to the thickness t of the conductive member, the risk of welding through and false welding of the tab can be effectively reduced.

In some embodiments, in the extension direction of the winding axis, the minimum value Hmin of the depth H of the welding area between the conductive member and the tab stack structure and the thickness t of the conductive member satisfy: 1.1*t ≤ Hmin ≤ 1.5*t.

By setting a specific range for the ratio of the minimum value Hmin of the depth of the welding area to the thickness t of the conductive member, the risk of welding through and false welding of the tab can be minimized.

In some embodiments, in the extension direction of the winding axis, the minimum value Hmin of the depth H of the welding area and the thickness t of the conductive member satisfy: 1.2*t ≤ Hmin ≤ 1.4*t.

By further defining an optional range for the ratio of the minimum value Hmin of the depth of the welding area to the thickness t of the conductive member, the risk of welding through and false welding of the tab can be effectively reduced.

In some embodiments, in the extension direction of the winding axis, a difference (Hmax-Hmin) between the maximum value Hmax and the minimum value Hmin of the depth H of the welding area between the conductive member and the tab stack structure and the thickness t of the conductive member satisfy: 0.2*t ≤ (Hmax-Hmin) ≤ 0.8*t.

By defining a specific range for the ratio of the difference (Hmax-Hmin) to the thickness t of the conductive member, the risk of local welding through or false welding of the tab can be reduced.

In some embodiments, in the extension direction of the winding axis, the difference (Hmax-Hmin) between the maximum value Hmax and the minimum value Hmin of the depth H of the welding area and the thickness t of the conductive member satisfy: 0.3*t ≤ (Hmax-Hmin) ≤ 0.6*t.

By further defining an optional range for the ratio of the difference (Hmax-Hmin) to the thickness t, the risk of local welding through or false welding of the tab can be further reduced.

In some embodiments, in the winding direction, a top spacing e between adjacent tabs among the plurality of tabs satisfies: e ≤ 0.5 mm.

By having the top spacing e between adjacent tabs less than or equal to 0.5 mm, the stacking degree of the tabs can be increased, thereby obtaining a greater tab stack thickness and reducing the risk of welding through of the tab.

In some embodiments, in the winding direction, the top spacing e between adjacent tabs among the plurality of tabs satisfies: $e \leq 0.2$ mm.

By further defining the top spacing e between the tabs to be less than or equal to 0.2 mm, the tab stack thickness can be effectively increased and the risk of welding through of the tab can be further reduced.

In some embodiments, the welding area between the conductive member and the tab stack structure includes a first portion located in the second tab stack area, and in the extension direction of the winding axis, a depth of the first portion increases toward the direction close to the winding axis.

Since the curvature of the electrode sheet winding layer is greater as it is closer to the winding axis, the connected tabs overlap more, so that the tab stack thickness gradually increases from the outside to the inside. This allows the welding power to gradually increase from the outside to the inside as well, forming a welding area with a depth increasing progressively from the outside to the inside, thereby improving the welding quality of the welding area.

In some embodiments, the welding area between the conductive member and the tab stack structure includes a first portion located in the second tab stack area and a second portion located in the first tab stack area, and in the extension direction of the winding axis, a depth of the first portion is less than a depth of the second portion.

Considering that the number of the tab stack layers in the first tab stack area is relatively small and the depth of the weld pool is relatively small without welding through, the welding power used in welding in the first tab stack area can be made lower than the welding power used in welding in the second tab stack area, thereby improving the welding quality of the second portion of the first tab stack area and reducing the risk of welding through of the tab.

In some embodiments, at least part of the plurality of tabs is rectangular or parallelogram-shaped.

Considering that rectangular or parallelogram-shaped tabs allows smaller top spacing between the tabs, the overlap between adjacent tabs can be increased, thereby increasing the tab stack thickness and reducing the risk of welding through of the tab.

In some embodiments, the wound structure is a cylindrical wound structure having a central hole, and a minimum distance r1 between the winding axis and a tab root of the first tab satisfies:

$$r1 \geq h0 + 0.8*R;$$

wherein h0 is a height of the first tab in an unbent state in the extension direction of the winding axis, and R is a radius of a section of the central hole at the end portion of the wound structure.

The minimum distance r1 is greater than or equal to the sum of the height h0 of the first tab and 0.8 times the radius R of the central hole, which is equivalent to the first tab closest to the winding axis covering no more than 20% of the radius of the central hole after being bent from the outside to the inside, thereby reducing the obstruction of the central hole after the tab is bent to avoid affecting the injection of electrolyte, and reducing the risk of short circuit caused by the tab being inserted downwards or torn during injection.

In some embodiments, the minimum distance r1 between the winding axis and the tab root of the first tab satisfies: $r1 \geq h0 + R$.

The minimum distance r1 is greater than or equal to the sum of the height h0 of the first tab and the radius R of the central hole, which is equivalent to the first tab closest to the winding axis not covering the central hole after being bent from the outside to the inside, thereby more effectively avoiding the influence of obstruction of the central hole by the tab on electrolyte injection.

In some embodiments, the plurality of tabs include a first tab group and a second tab group, a plurality of electrode sheet winding turns where the first tab group is located are located outward of the at least one electrode sheet winding turns where the second tab group is located, and in the extension direction of the winding axis, a minimum height h1 of the first tab group in an unbent state is greater than a maximum height h2 of the second tab group in an unbent state.

By having the maximum height h2 of the second tab group located inward of the first tab group smaller than the minimum height h1 of the first tab group, the first tab connected to the welding area is enabled to be closer to the winding start end, which can reduce the risk of overcurrent in the first tab. In addition, the smaller tab height of the first tab group can reduce or avoid covering of the central hole, thereby effectively avoiding the influence of obstruction of the central hole by the tab on electrolyte injection.

In some embodiments, the second tab group includes the first tab, and in the extension direction of the winding axis, the height h2 of the second tab group in the unbent state decreases progressively toward the direction close to the winding axis.

By decreasing progressively the height of various turns of tabs of the first tab group from the outside to the inside, the second tab stack area is enabled to extend more toward the winding axis, thereby increasing the range of the second tab stack area, which can increase the size of the first portion of the welding area in the second tab stack area, improve the welding quality of the welding area, and reduce the risk of welding through or false welding of the tab.

In some embodiments, the shell includes a case and an end cover, the case has an opening at an end, the end cover covers the opening, the case includes a side wall and a bottom wall, the side wall surrounds the outer side of the electrode assembly, the bottom wall is disposed opposite to the opening, and the wall portion of the shell is either the end cover or the bottom wall.

The conductive member is electrically connected to the electrode terminal disposed on the end cover or the bottom wall of the case, and is welded to the tab stack structure of the electrode assembly, which improves the welding quality of the welding area while reducing the short circuit risk of the battery cell and improving the use safety.

In an aspect of the present disclosure, a battery is provided, including the battery cell as described above. The battery adopting the battery cell described above can effectively improve the use safety.

In an aspect of the present disclosure, an electrical device is provided, including the battery as described above. The electrical device adopting the battery described above can effectively improve the use safety.

## BRIEF DESCRIPTION OF DRAWINGS

In order to more clearly illustrate the technical solutions of the embodiments of the present disclosure, the drawings to be used in the description of the embodiments of the present disclosure will be described briefly below. Obviously, the drawings in the following description are merely some embodiments of the present disclosure. For those skilled in the art, other drawings can also be obtained according to these drawings without any creative effort.

The present disclosure can be more clearly understood from the following detailed description with reference to the accompanying drawings, in which:

FIG. 1 is a schematic structural view of an electrical device according to some embodiments of the present disclosure;
FIG. 2 is a schematic exploded diagram of a battery according to some embodiments of the present disclosure;
FIG. 3 is a schematic diagram of the connection among a plurality of battery cells in a battery according to some embodiments of the present disclosure;
FIG. 4A is a schematic exploded diagram of a battery cell according to some embodiments of the present disclosure;
FIG. 4B is a schematic longitudinal sectional diagram taken along a winding axis in a battery cell according to some embodiments of the present disclosure;
FIG. 4C is a schematic exploded diagram of an electrode assembly and conductive members in a battery cell according to some embodiments of the present disclosure;
FIG. 5 is a schematic cross-sectional diagram of a wound structure in a battery cell according to some embodiments of the present disclosure;
FIG. 6 is a schematic diagram of electrode sheets and tabs in an unfolded state in a battery cell according to some embodiments of the present disclosure;

FIG. 7 is a schematic sectional structural diagram of a tab stack structure welded to conductive members in a battery cell according to some embodiments of the present disclosure;
FIG. 8 is a schematic sectional diagram of a plurality of tab stack areas of a tab stack structure in a battery cell according to some embodiments of the present disclosure;
FIG. 9 is a schematic diagram showing the distribution of welding areas in a plurality of tab stack areas of a tab stack structure in a battery cell according to some embodiments of the present disclosure;
FIG. 10 is a schematic diagram showing the dimensions of various parts in a welding area in a battery cell according to some embodiments of the present disclosure;
FIG. 11 is a schematic diagram of adjacent tabs overlapping in different tab stack areas in a battery cell according to some embodiments of the present disclosure;
FIGS. 12 and 13 are respectively schematic diagrams showing the dimensions of tabs of different shapes connected to electrode sheets in a battery cell according to some embodiments of the present disclosure;
FIG. 14 is a schematic diagram showing the dimensions of a bent tab and a central hole in a battery cell according to some embodiments of the present disclosure;
FIG. 15 is a schematic diagram showing the height of tabs in an unbent state in a battery cell according to some other embodiments of the present disclosure; and
FIG. 16 is a schematic sectional diagram of a plurality of tab stack areas after the tabs in FIG. 15 are bent toward the central hole.

It should be understood that the dimensions of various parts shown in the drawings are not drawn to actual scale. In addition, the same or similar reference signs indicate the same or similar members.

Description of reference numerals:

10-electrode assembly; 10a-first electrode sheet; 10b-second electrode sheet; 10c-separator; 100-wound structure; 110-central hole; 11-current collector substrate; 12-active material layer; 13-tab; 130-tab stack structure; 130a-first tab stack area; 130b-second tab stack area; 130c-third tab stack area; 131-first tab; 132-second tab; 13a-first tab group; 13b-second tab group;
21, 22-conductive member;
30-welding area; 31-first portion; 32-second portion; 33-third portion;
40-battery cell; 4A-shell; 41-case; 411-opening; 412-through hole; 42-end cover; 421-pressure relief component; 43-electrode terminal; 44-insulating member; 45-electrode lead-out portion; 46-busbar;

50-battery; 51-box; 52-box cover;
60-vehicle;
wd-winding direction; CL-winding axis; WS-winding start end.

## DETAILED DESCRIPTION

Implementations of the present disclosure are described in further detail below in conjunction with the drawings and embodiments. The following detailed description of the embodiments and the drawings are configured to illustrate the principles of the present disclosure by way of example, but should not be configured to limit the scope of the present disclosure, that is, the present disclosure is not limited to the described embodiments.

In the description of the present disclosure, it should be noted that, unless otherwise stated, "plurality of" means two or more; the orientation or positional relationships indicated by the terms "upper", "lower", "left", "right", "inner" and "outer" are only for facilitating the description of the present disclosure and simplifying the description, rather than indicating or implying that the apparatus or element referred to must have a particular orientation or be constructed and operated in a particular orientation, and therefore will not be interpreted as limiting the present disclosure. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present disclosure. In the description of the present disclosure, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the terms mentioned above in the present disclosure should be construed according to specific circumstances.

Some implementations of the present invention will be further described in detail below with reference to the drawings. In the case of no conflict, the features of the embodiments describe below can be combined with each other.

In the present disclosure, the phrase "a plurality of" means two or more.

In the embodiments of the present disclosure, the battery cell may be a secondary battery. The secondary battery refers to a battery cell that can be charged to activate the active material and continue to be used after the battery cell is discharged.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, or the like, which is not limited in the embodiments of the present application.

The battery cell generally includes an electrode assembly. The electrode assembly includes a plurality of electrode sheets and separators disposed between adjacent electrode sheets. The plurality of electrode sheets may include a positive electrode sheet and a negative electrode sheet having opposite polarities. During charging and discharging of the battery cell, active ions (e.g., lithium ions) move back and forth between the positive electrode sheet and the negative electrode sheet to be intercalated and deintercalated. The separator is disposed between the positive electrode sheet and the negative electrode sheet, and can function to prevent short circuit between the positive electrode and the negative electrode, while allowing active ions to pass through.

In some implementations, the positive electrode sheet may include a positive electrode current collector substrate and a positive electrode active material layer disposed on at least one surface of the positive electrode current collector substrate.

As an example, the positive electrode current collector substrate has two surfaces opposite in its own thickness direction, and the positive electrode active material layer is arranged on either one or both of the two opposite surfaces of the positive electrode current collector substrate.

As an example, the positive electrode current collector substrate can be made of a metal foil or a composite current collector. For example, silver surface-treated aluminum or stainless steel, stainless steel, copper, aluminum, nickel, carbon electrode, carbon, nickel, titanium, or the like may be used as the metal foil. The composite current collector may include a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material layer may include at least one of the following materials: a lithium-containing phosphate, a lithium transition metal oxide, and a respective modified compound thereof. However, the present disclosure is not limited to these materials, and other conventional materials useful as positive electrode active material layers for batteries can also be used. These positive electrode active material layers may be used alone or in combination of two or more thereof. Examples of lithium-containing phosphates may include, but are not limited to, at least one of lithium iron phosphate (e.g., $LiFePO_4$ (also abbreviated as LFP)), lithium iron phosphate-carbon composite, lithium manganese phosphate (e.g., $LiMnPO_4$), lithium manganese phosphate-carbon composite, lithium iron manganese phosphate, and lithium iron manganese phosphate-carbon composite. Examples of lithium transition metal oxides may include, but are not limited to, at least one of lithium cobalt oxide (e.g., $LiCoO_2$), lithium nickel oxide (e.g., $LiNiO_2$), lithium manganese oxide (e.g., $LiMnO_2$, $LiMn2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$)), lithium nickel cobalt aluminum oxide (e.g., $LiNi_{0.85}Co_{0.15}Al_{0.05}O_2$), and a modified compound thereof, etc.

In some implementations, the negative electrode sheet may include a negative electrode current collector substrate.

As an example, the negative electrode current collector substrate can be made of a metal foil, metal foam, or composite current collector. For example, silver surface-treated aluminum or stainless steel, stainless steel, copper, aluminum, nickel, carbon electrode, carbon, nickel, titanium, or the like may be used as the metal foil. The foam metal may be foam nickel, foam copper, foam aluminum, foam alloy, or foam carbon, etc. The composite current collector may include a high molecular material substrate layer and a metal layer. The composite current collector may be formed by forming a metal material (e.g., copper, copper alloy, nickel, nickel alloy, titanium, titanium alloy, silver, silver alloy, and the like) on a high molecular material substrate (e.g., a substrate of polypropylene, polyethylene terephthalate, polybutylene terephthalate, polystyrene, polyethylene, and the like).

As an example, the negative electrode sheet may include a negative electrode current collector substrate and a negative electrode active material layer provided on at least one surface of the negative electrode current collector substrate.

As an example, the negative electrode current collector substrate has two surfaces opposite in the thickness direction thereof, and the negative electrode active material layer is disposed on either one or both of the two opposite surfaces of the negative electrode current collector substrate.

As an example, the negative electrode active material layer may use a negative electrode active material layer commonly known in the field for use in battery cells. As an example, the negative electrode active material layer may include at least one of the following materials: artificial graphite, natural graphite, soft carbon, hard carbon, silicon-based material, tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present disclosure is not limited to these materials, and other conventional materials useful as negative electrode active material layers for batteries can also be used. These negative electrode active material layers may be used alone or in a combination of two or more thereof.

In some implementations, the material of the positive electrode current collector substrate may be aluminum, and the material of the negative electrode current collector substrate may be copper.

In some implementations, the electrode assembly further comprises a separator provided between the positive electrode and the negative electrode.

In some implementations, the separator is a separator film. The type of the separator film is not particularly limited in the present disclosure and any well-known separator film of a porous structure having good chemical stability and mechanical stability may be selected.

As an example, the main material of the separator film may be selected from at least one of glass fiber, non-woven fabric, polyethylene, polypropylene, polyvinylidene fluoride, and ceramic. The separator film may be a single-layer film, or may be a multi-layer composite film, which is not particularly limited. When the separator film is a multi-layer composite film, the material in various layers may be the same or different, which is not particularly limited. The separator may be a separate component positioned between the positive electrode sheet and the negative electrode sheet, or may be attached to the surface of the positive electrode sheet and/or the surface of the negative electrode sheet.

In some implementations, the separator is a solid electrolyte. The solid electrolyte is disposed between the positive electrode sheet and the negative electrode sheet, and functions to transport ions and isolate the positive electrode from the negative electrode.

In some implementations, the battery cell further includes an electrolyte that functions to conduct ions between the positive electrode and the negative electrode. The type of the electrolyte is not specifically limited in the present disclosure, and may be selected according to needs. The electrolyte may be in a liquid state, a gel state, or a solid state.

As an example, the liquid electrolyte includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. An ether solvent may also be used as the solvent. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

As an example, the gel electrolyte includes a skeleton network with a polymer as the electrolyte, paired with an ionic liquid-lithium salt.

As an example, the solid electrolyte includes a polymer solid electrolyte, an inorganic solid electrolyte, and a composite solid electrolyte.

As an example, the polymer solid electrolyte may be a polyether (polyoxyethylene), polysiloxane, polycarbonate, polyacrylonitrile, polyvinylidene fluoride, polymethyl methacrylate, monoionic polymer, polyionic liquid-lithium salt, cellulose, or the like.

As an example, the inorganic solid electrolyte may be one or more of an oxide solid electrolyte (crystalline perovskite, sodium superionic conductor, garnet, amorphous LiPON film), a sulfide solid electrolyte (crystalline lithium superionic conductor (lithium germanium phosphorus sulfur, sulfide silver germanium ore), amorphous sulfide), a halide solid electrolyte, a nitride solid electrolyte, and a hydride solid electrolyte.

As an example, the composite solid electrolyte is formed by adding an inorganic solid electrolyte filler into a polymer solid electrolyte.

In some implementations, the electrode assembly includes a wound structure. The positive electrode sheet, the negative electrode sheet, and the separator are wound into a wound structure.

As an example, a plurality of positive electrode sheets and a plurality of negative electrode sheets may be provided separately, and the plurality of positive electrode sheets and the plurality of negative electrode sheets are stacked alternately.

As an example, a plurality of positive electrode sheets may be provided, and the negative electrode sheets are folded to form a plurality of stacked folded segments, with one positive electrode sheet sandwiched between adjacent folded segments.

As an example, both the positive electrode sheets and the negative electrode sheets are folded to form a plurality of stacked folded segments.

As an example, a plurality of separators may be provided respectively between any adjacent positive electrode sheets or negative electrode sheets.

As an example, the separators may be continuously disposed between any adjacent positive electrode sheets or negative electrode sheets by means of folding or winding.

In some implementations, the shape of the electrode assembly may be a cylinder, a flat shape, a polygon prism, or the like.

In some implementations, the electrode assembly includes tabs that can lead electrical current out of the electrode assembly. The tabs include a positive tab and a negative tab that are respectively connected to the positive electrode current collector substrate and the negative electrode current collector substrate. The tabs may be formed by trimming or cutting the current collector substrates or may be connected to the side edge of the current collector substrates by means of welding.

In some implementations, the battery cell may include a shell. The shell is configured to encapsulate components, such as the electrode assembly and electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square battery cell, a blade battery cell, and a polygon-prism battery. For example, the polygon-prism battery may be a hexagonal prism battery, or the like, which is not particularly limited in the present disclosure.

The battery mentioned in the embodiments of the present disclosure refers to a single physical module including one or more battery cells to provide a higher voltage and capacity.

In some embodiments, the battery may be a battery module. When there are a plurality of battery cells, the plurality of battery cells are arranged and fixed to form a battery module. The battery module may include a plurality of battery cells connected in series, in parallel or in a parallel-series connection.

In some embodiments, the battery may be a battery pack. The battery pack comprises a box and a battery cell. The battery cell or the battery module is accommodated in the box.

In some embodiments, the box may be a part of a vehicle chassis structure. For example, a part of the box may become at least a part of a vehicle floor, or a part of the box may become at least a part of a cross beam and a longitudinal beam of a vehicle.

In some embodiments, the battery may be an energy storage apparatus. The energy storage apparatus includes an energy storage container, an energy storage cabinet, or the like.

In some battery cells of related art, when the tabs at the ends of the electrode assembly are welded to the current collector plate, there is a possibility of welding quality problems such as welding through of the tab or false welding, thereby affecting the use safety of the battery.

In view of this, embodiments of the present disclosure provide a battery cell, a battery, and an electrical device, which can improve the use safety of the battery.

The battery cell of the embodiments of the present disclosure can be applied to various types of batteries. The battery may include a box and a battery module, where the box is used to provide an accommodating space for the battery module, and the battery module is installed within the box. The box may be made of a metal material. The battery module may include a plurality of battery cells connected in series, in parallel or in a parallel-series connection. The battery cell is the smallest unit constituting a battery. The battery cell includes an electrode assembly that can undergo an electrochemical reaction.

The battery of the embodiments of the present disclosure can be applied to various types of electrical devices that use batteries. The electrical device may be, for example, a mobile phone, a portable device, a laptop, an electric motorcycle, an electric vehicle, a ship, a spacecraft, an electric toy, an electric tool, or the like. For example, the spacecraft includes an airplane, a rocket, a space shuttle, a spaceship, or the like. The electric toy includes a fixed or mobile electric toy, such as a game console, an electric vehicle toy, an electric ship toy, an electric airplane toy, or the like. The electric tool includes an electric tool for metal cutting, an electric tool for grinding, an electric tool for assembling, and an electric tool for railways, such as an electric drill, an electric grinder, an electric wrench, an electric screwdriver, an electric hammer, an electric impact drill, a concrete vibrator, and an electric planer. The electrical device is not particularly limited in the embodiments of the present disclosure. The battery can be used to supply power for an electrical device, such as a vehicle, for example, supplying power for manipulation or driving propulsion for the vehicle.

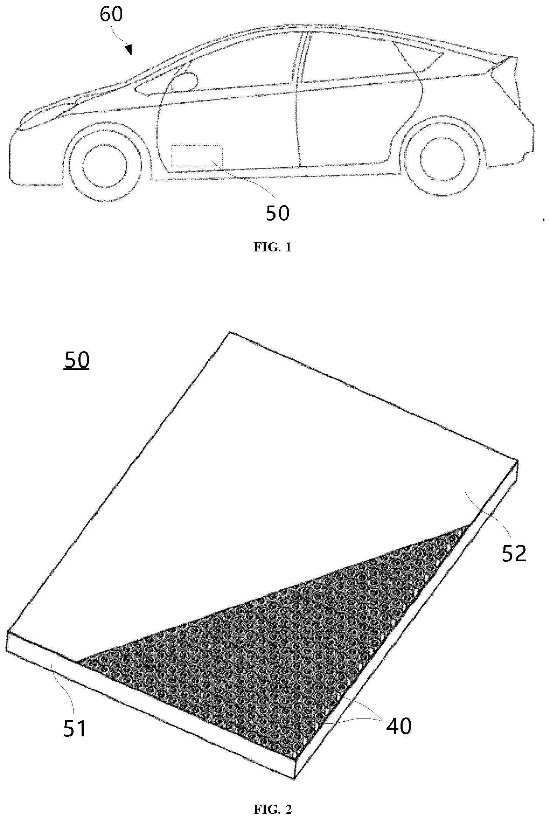

FIG. 1 is a schematic structural diagram of an electrical device according to some embodiments of the present disclosure. For ease of explanation, a vehicle is taken as an example of the electrical apparatus. The vehicle 60 may be a fuel vehicle, a gas vehicle or a new energy vehicle. The new energy vehicle may be an all-electric vehicle, a hybrid electric vehicle, or the like. A battery 50 may be provided at the bottom or the head or the tail of the vehicle 60.

The battery 50 may be used to supply power to the vehicle 60. For example, the battery 50 may serve as an operating power supply of the vehicle 60 for use in a circuit system of the vehicle 60, for example, to meet a working power demand of the vehicle 60 during startup, navigation, and running. The battery 50 may not only be used as the operating power source of the vehicle 60, but also may be used as a driving power source of the vehicle 60 to provide driving force for the vehicle 60 in place of or partially in place of fuel or natural gas.

The vehicle 60 may be further provided with an axle, wheels, a motor, and a controller. The controller is used to control the battery 50 to power the motor. For example, when the vehicle 60 uses the battery 50 as the driving power source, the battery 50 can provide the motor with power required for constant speed and acceleration in place of or partially in place of fuel or natural gas. The motor is used to drive the axle to rotate, so as to drive the wheels to rotate.

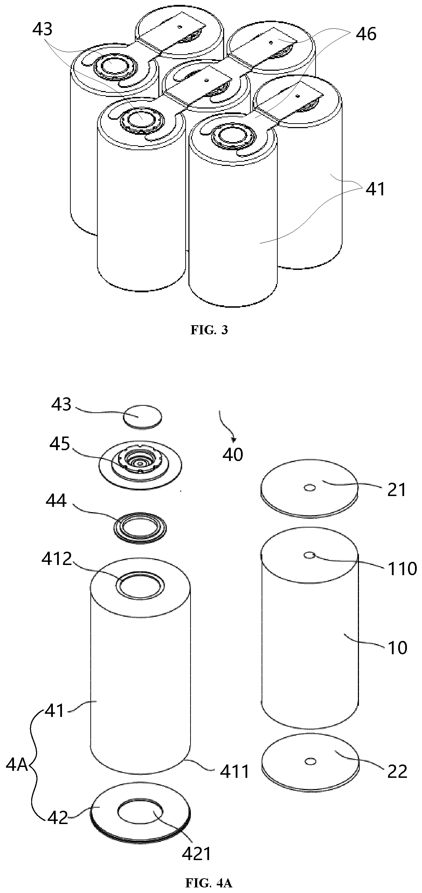

FIG. 2 is a schematic exploded diagram of a battery according to some embodiments of the present disclosure. FIG. 3 is a schematic diagram of the connection among a plurality of battery cells in a battery according to some embodiments of the present disclosure.

With reference to FIG. 2, in some embodiments, the battery 50 includes a box 51, a box cover 52 that covers the open side of the box 51, and one or more battery cells 40 disposed within the box 51. The box 51 and the box cover 52 can provide an accommodating space for the battery cells 40 and offer functions such as cooling, sealing, and impact resistance, and are also capable of preventing unfavorable effects on the charging and discharging or safety of the battery cells caused by liquids or other foreign matters.

The box 51 and the box cover 52 may be of various shapes, such as cuboids or cylinders. The box 51 may be of a hollow structure with an open side, and the box cover 52 is a box cover 52 of a plate-like structure that covers the open side of the box 51, thereby forming an internal accommodating space. In another embodiment, the box 51 is of a hollow structure with an open side, and the box cover 52 is also of a hollow structure with an open side. The open side of the box cover 52 covers the open side of the box 51, thereby forming an internal accommodating space.

With reference to FIGS. 2 and 3, the battery cells 40 are electrically connected to each other, such as in series, in parallel, or in parallel-series connection, to achieve the desired electrical performance parameters of the battery 50. The parallel-series connection refers to a connection in which some of the plurality of battery cells 40 are connected in series while others are connected in parallel. Adjacent battery cells 40 can be electrically connected via a busbar 44. The plurality of battery cells 40 are arranged in rows, and one or more rows of battery cells 40 may be provided within the box as appropriate.

In some embodiments, the battery cells 40 of the battery 50 may be disposed in at least one of the length direction and the width direction of the box. At least one row or column of battery cells 40 may be provided depending on actual needs. One or more layers of battery cells 40 may also be provided in the height direction of the battery 50 as appropriate.

In some embodiments, the plurality of battery cells 40 may be connected in series or in parallel or in parallel-series connection first to form a plurality of battery modules, which may then be connected in series or in parallel or in parallel-series connection to form an entirety that is accommodated in the box 51. In some other embodiments, all the battery cells 40 are directly connected in series or in parallel or in parallel-series connection, and then an entirety composed of all the battery cells 40 is accommodated in the box.

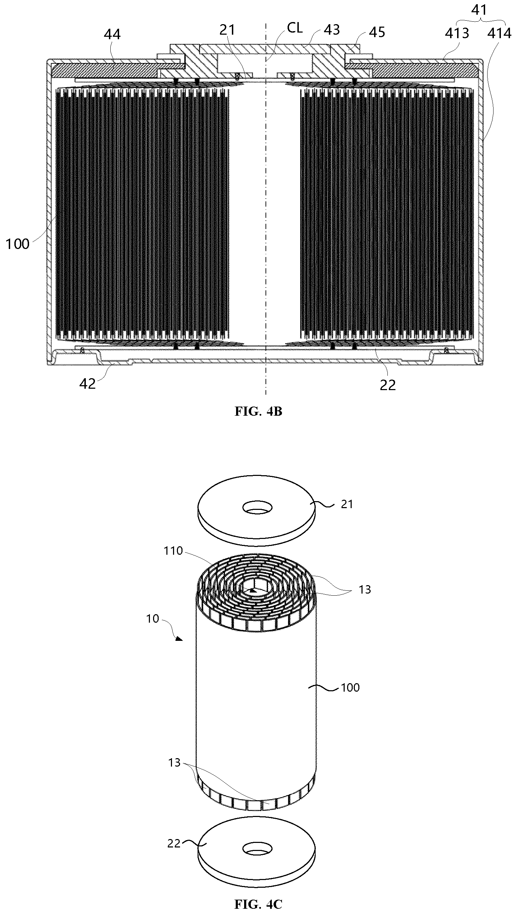

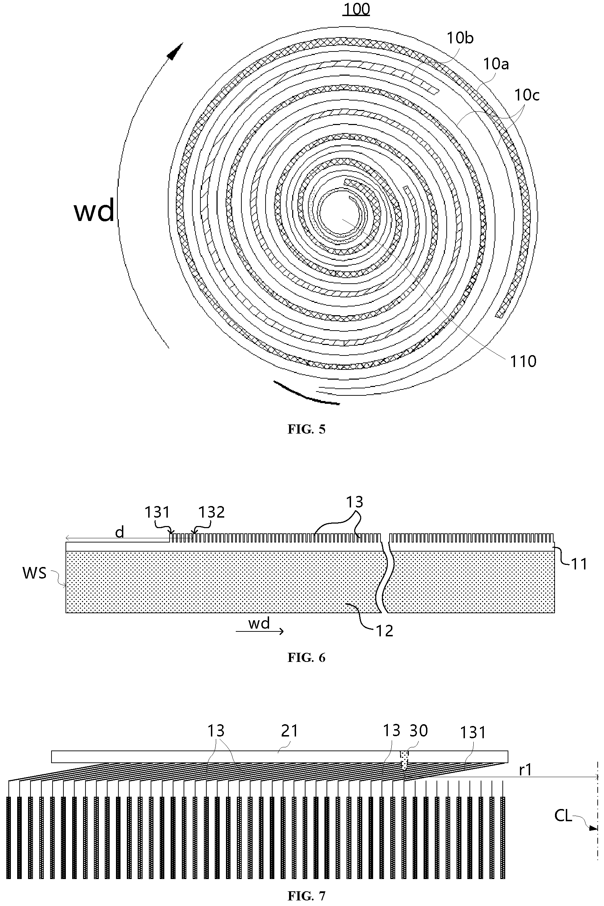

FIG. 4A is a schematic exploded diagram of a battery cell according to some embodiments of the present disclosure. FIG. 4B is a schematic longitudinal sectional diagram taken along a winding axis of a battery cell according to some embodiments of the present disclosure. FIG. 4C is an exploded schematic diagram of an electrode assembly and conductive members in a battery cell according to some embodiments of the present disclosure. FIG. 5 is a schematic cross-sectional diagram of a wound structure in a battery cell according to some embodiments of the present disclosure.

With reference to FIGS. 3 to 5, in some embodiments, the battery cell 40 includes an electrode assembly 10, a shell 4A, an electrode terminal 42, and conductive members 21 and 22. The electrode assembly 10 includes a plurality of electrode sheets 10a and 10b and separators 10c disposed between adjacent electrode sheets 10a and 10b having opposite polarities among the plurality of electrode sheets 10a and 10b. The plurality of electrode sheets 10a and 10b and the separators 10c are wound in a winding direction wd and form a wound structure 100.

In FIG. 5, the plurality of electrode sheets may include an electrode sheet 10a as a positive electrode sheet and an electrode sheet 10b as a negative electrode sheet, and the electrode sheet winding turns respectively formed by the electrode sheets 10a and the electrode sheets 10b in the wound structure 100 are at least partially arranged alternately from the outside to the inside. The separator 10c may be provided in the form of a separator film between the electrode sheet 10a and the electrode sheet 10b. In some other embodiments, alternatively, the electrode sheet 10a may be a negative electrode sheet, and the electrode sheet 10b may be a positive electrode sheet.

Referring to FIGS 4A and 4B, the shell 4A has a chamber for accommodating the electrode assembly 10. The electrode terminal 42 is disposed on a wall portion of the shell 4A and electrically connected to the conductive member 21. The electrode terminal 42 may be disposed on a side wall or a bottom wall of the shell 4A.

The cavity of the shell 4A can accommodate not only the electrode assembly 10 but also the electrolyte. The shape of the shell 4A may be determined based on the shape of one or more electrode assemblies 10 accommodated within the cavity. For example, the shell 4A may be in the shape of a hollow cuboid, a hollow cube, or a hollow cylinder.

The shell 4A may include a case 41 and an end cover 42. The case 41 is of a hollow structure with an opening 411 at one or both ends, and it may be made of one or more materials, such as copper, iron, aluminum, steel, aluminum alloy, plastic, etc. The end cover 42 may be made of metal or non-metal materials and may be fixedly connected to the case 41 through connection means such as welding, bonding, or fasteners.

Referring to FIG. 4B, the case 41 has an opening 411 at one end, and the end cover 42 covers the opening 411. The case 41 includes a side wall 414 and a bottom wall 413. The side wall 414 surrounds the outer side of the electrode assembly 10, and the bottom wall 413 is disposed opposite to the opening 411. The wall portion of the shell 4A is the end cover 42 or the bottom wall 413. Accordingly, the electrode terminal 42 may be disposed on the end cover 42 or on the bottom wall 413.

For a cylindrical battery cell, the case 41 may be a cylindrical hollow structure with an opening 411 at one end, and the end cover 42 may be a disk-shaped structure that matches the opening 411. The electrode terminal 42 may be disposed on the bottom wall 413 on the side of the case 41 away from the end cover 42. In FIGS. 4A and 4B, the bottom wall 413 is provided with a through hole 412, and the electrode terminal 42 may be disposed on the through hole 412 via the electrode lead-out portion 45 and the insulating member 42. The electrode lead-out portion 45 may at least partially protrude from the outer surface of the bottom wall 413 to facilitate electrical connection between various battery cells 40 via a busbar 46. The insulating member 42 is used to insulate the electrode lead-out portion 45 from the case 41 and may be made of a rubber or plastic material. Optionally, openings are provided at both ends of the case, and both openings can be covered by end covers. The electrode lead-out portion and the electrode terminal may be disposed on the end covers.

Referring to FIG. 4A, a pressure relief component 421 may be provided on the end cover 42. The pressure relief component refers to an element or component that is actuated to relieve an internal pressure or temperature of the battery cell when the internal pressure or temperature reaches a predetermined threshold. The threshold design varies according to different design requirements. The threshold may depend on the material of one or more of the positive electrode sheet, the negative electrode sheet, the electrolyte, and the separator film in the battery cell. The pressure relief component may take the form of an explosion-proof valve, a gas valve, a pressure relief valve, a safety valve, or the like, and may specifically adopt a pressure-sensitive or temperature-sensitive element or structure. That is, when the internal pressure or temperature of the battery cell reaches a predetermined threshold, the pressure relief component performs an action or a weak structure provided in the pressure relief component is damaged, so as to form an opening or channel for releasing the internal pressure or temperature.

The emissions from the battery cell mentioned here include, but are not limited to: electrolyte, dissolved or fragmented positive and negative electrode sheets, fragments of the separator film, high-temperature and high-pressure gases generated from reactions (e.g., combustible gases such as CH4, CO, etc.), flames, and the like.

Referring to FIGS. 4A to 4C, the conductive members 21 and 22 may be located on either side of the electrode assembly 10 in the extension direction of the winding axis of the wound structure 100, or may be located on one side of the electrode assembly 10 in the extension direction of the winding axis of the wound structure 100. In FIG. 4B, the conductive member 21 is welded to the tab at one end of the electrode assembly 100 and to the electrode lead-out portion 45, and the conductive member 22 is welded to the tab at the other end of the electrode assembly 100 and to the end cover 42. The conductive members 21 and 22 can serve as current collectors to realize the electrical connection between the electrode assembly and a structure such as the electrode terminal and the end cover. The conductive member may be a metal conductor, such as copper, iron, aluminum, steel, aluminum alloy, etc. In some embodiments, the conductive member may include a current collector plate or other structures.

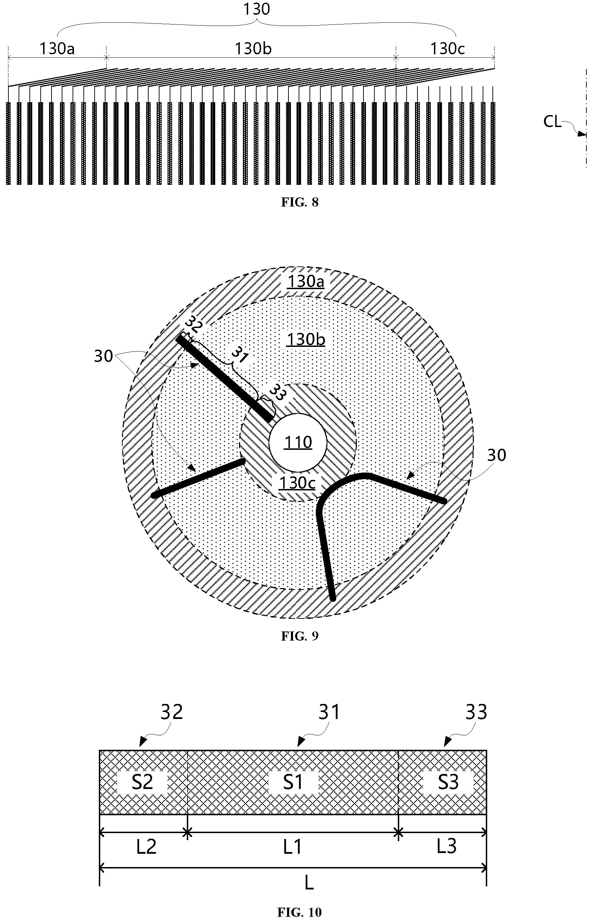

FIG. 6 is a schematic diagram of electrode sheets and tabs in an unfolded state in a battery cell according to some embodiments of the present disclosure. FIG. 7 is a schematic sectional structural diagram of a tab stack structure welded to conductive members in a battery cell according to some embodiments of the present disclosure. FIG. 8 is a schematic sectional diagram of a plurality of tab stack areas of a tab stack structure in a battery cell according to some embodiments of the present disclosure.

Referring to FIG. 6, at least one of the plurality of electrode sheets of the electrode assembly 10 includes a current collector substrate 11 and a plurality of tabs 13. The electrode sheet may further include an active material layer 12 covering the surface on at least one side of the current collector substrate 11.

The plurality of tabs 13 are connected to at least one side edge of the current collector substrate 11 extending in the winding direction wd, and are arranged at intervals in the winding direction wd. The plurality of tabs 13 may be connected to one side edge of the current collector substrate 11 extending in the winding direction wd, or may be connected to two sides edges of the current collector substrate 11 extending in the winding direction wd.

In some embodiments, the plurality of tabs 13 may be formed by cutting or trimming the current collector substrate. In some other embodiments, the plurality of tabs 13 may be welded to the side edges of the current collector substrate 11 respectively.

Referring to FIG. 7, at least part of the plurality of tabs 13 is bent toward a direction close to the winding axis CL of the wound structure 100, and forms a tab stack structure 130 at an end portion of the wound structure 100. The tab stack structure 130 may be electrically connected to the electrode terminal 42 disposed on the wall portion of the shell 4A through conductive members 21 and 22 (e.g., current collector plates) that are electrically conductive. Specifically, the conductive members 21 and 22 are welded to the tab stack structure 130.

The conductive members 21 and 22 can form a continuous or discrete welding area 30 with the tab stack structure 130. When the conductive members 21 and 22 are welded to the tab stack structure 130 by means of laser or the like, the welding area 30 takes the form of a liquid metal portion that has melted into a certain geometric shape due to heating, which is referred to as a weld pool.

Referring to FIGS. 7 and 8, the tab stack structure 130 includes a first tab stack area 130a and a second tab stack area 130b arranged from outside to inside in a direction close to the winding axis CL. FIGS. 7 and 8 show partial cross-sections of the electrode sheets after winding, where the tabs connected to the respective winding turns are bent toward the winding axis CL and stacked in sequence, the winding axis CL being drawn by a dotted line. For the convenience of representation, other electrode sheets and isolation members in the wound structure are omitted in the figures.

The number of the tab stack layers in the first tab stack area 130a increases in the direction close to the winding axis CL. The number of the tab stack layers in the second tab stack area 130b is the same in the direction close to the winding axis CL. The number of the tab stack layers at a certain position here refers to the number of the tab stack layers connected by different electrode sheet winding turns of the tab stack structure 130 at this position, that is, the number of electrode sheet winding turns corresponding to various tabs stacked at this position.

Referring to FIG. 8, in the first tab stack area 130a, the number of the tab stack layers decreases as the position is farther away from the winding axis CL. For tabs of substantially the same height, the number of stack layers gradually increases from one outermost layer to more than 10 layers. The position where the second tab stack area 130b meets the first tab stack area 130a is actually the position where the number of the tab stack layers in the first tab stack area 130a no longer continues to increase. The number of the tab stack layers of the second tab stack area 130b at various positions in the direction close to the winding axis CL remains the same.

Referring to FIG. 6, the first tab 131 is defined as the tab that is closest to the winding start end WS of the current collector substrate among the plurality of tabs 13. In order to conveniently show the first tab 131, the electrode sheet in FIG. 6 has been flattened, and its length direction is actually consistent with the winding direction. The winding start end WS is the starting position for winding of the electrode sheet and is located at the innermost side of the wound structure. Accordingly, the second tab stack area 130 may extend to the electrode sheet winding turn where the first tab 131 is located.

FIG. 9 is a schematic diagram showing the distribution of welding areas in a plurality of tab stack areas of a tab stack structure in a battery cell according to some embodiments of the present disclosure. Referring to FIG. 9, at least a part of the welding area 30 between the conductive members 21 and 22 and the tab stack structure 130 is located in the second tab stack area 130b. In some embodiments, the welding area 30 is entirely located in the second tab stack area 103b. In some other embodiments, one part of the welding area 30 is located in the second tab stack area 103b, and the other part is located in other parts of the tab stack structure than the second tab stack area 103b.

As the number of the tab stack layers in the second tab stack area 130b is the same, when the conductive members 21 and 22 are welded to the tab stack structure 130 formed at the end portion of the winding structure 100, the tab stack layers are more and the stack thickness is higher in the second tab stack area 130b than other tab stack areas, so it is not easy to be welded through when welding with the conductive members 21 and 22, thereby improving the welding quality of the welding area 30 and reducing the risk of short circuit caused by burn of the separator film 10c or the electrode sheet during welding.

Referring to FIGS. 7 to 9, in some embodiments, the welding area 30 includes a first portion located 31 in the second tab stack area 130b and a second portion 32 located in the first tab stack area 130a. The first tab stack area 130a is located outward of the second tab stack area 130b, and the number of the tab stack layers increases from the outside to the inside. By welding the second tab stack area 130b and the first tab stack area 130a to the conductive members through the first portion 31 and the second portion 32 of the welding area 30 respectively, the overall size of the welding area 30 can be increased, thereby improving the welding strength, reducing the resistance of the welding area 30, and thus reducing the risk of overcurrent. The second portion 32 may be connected to the first portion 31, or may be spaced apart from the first portion 31.

In some embodiments, the tab stack structure 130 further includes a third tab stack area 130c located on a side of the second tab stack area 130b adjacent to the winding axis CL, and the welding area 30 further includes a third portion 33 located in the third tab stack area 130c.

/The number of tab stack layers of the third tab stack area 130c are located inward of the second tab stack area 130b, and the number of the tab stack layers decreases from outside to inside. By welding the third tab stack area 130c to the conductive members 21 and 22, the overall size of the welding area 30 can be increased, thereby improving the welding strength and reducing the resistance of the welding area 30, thus reducing the risk of overcurrent.

The welding area may be distributed at a plurality of positions on the conductive members, including continuous or discrete welding segments located at different radial positions or different circumferential positions. Referring to FIG. 9, it can be seen that the welding area 30 is composed of a plurality of segments, and the shape may be a straight line segment, a curved line segment, or a straight line segment and a curved line segment connected together.

FIG. 10 is a schematic diagram showing the dimensions of various portions of a welding area in a battery cell according to some embodiments of the present disclosure. For ease of understanding, here the welding areas distributed at various positions are schematically disposed in a rectangular area, and the portions of the welding area corresponding to different tab stack areas are indicated by dotted lines. In FIG. 10, the first portion 31 corresponds to the second tab stack area 130b, the second portion 32 corresponds to the first tab stack area 130a, and the third portion 33 corresponds to the third tab stack area 130c.

Referring to FIG. 10, in some embodiments, a ratio S1/S of an area S1 of the first portion 31 to an area S of the welding area 30 satisfies: $S1/S \geq 70\%$. The area S here is the total area of the welding area 30, and in FIG. 10, the area S is the sum of the areas S1, S2, and S3. Referring to the welding area 30 shown in FIG. 7, its three-dimensional shape may be irregular, and the area here can be calculated according to the projection area of the weld pool on the surface of the conductive member on the side away from the tab stack structure.

Since the welding area 30 includes the first portion 31 and may also include other portions, the ratio S1/S represents the proportion of the first portion 31 in the welding area 30. Since it is easier to obtain good welding quality in the first portion 31, increasing this proportion can improve the welding quality of the welding area 30. Therefore, by having the ratio S1/S greater than or equal to 70%, the welding quality of the welding area 30 can be improved and the risk of welding through or false welding of the tab can be reduced.

Optionally, the ratio S1/S of the area S1 of the first portion 31 to the area S of the welding area 30 satisfies: $S1/S \geq 90\%$, for example, S1/S is equal to 90%, 95%, 98% or 100%. By further defining the ratio S1/S to be greater than or equal to 90%, the welding quality of the welding area 30 can be further improved and the risk of welding through or false welding of the tab can be effectively reduced.

Referring to FIGS. 9 and 10, in some embodiments, the wound structure 100 is a cylindrical wound structure. A ratio L1/L of the maximum radial length L1 of the first portion 31 in the radial direction of the cylindrical wound structure to the maximum radial length L of the welding area 30 in the radial direction of the cylindrical wound structure satisfies: $L1/L \geq 70\%$. The maximum radial length L here is the maximum length of the welding area 30 in the radial direction. In FIG. 10, the maximum radial length L is the sum of the maximum radial lengths L1, L2, and L3.

In determining the maximum radial length of each portion, the positions of each portion of the welding area that are farthest and closest to the winding axis CL can be selected, and the difference in the shortest distances from the farthest and closest positions to the winding axis CL can be calculated respectively, and this difference is the maximum radial length of the corresponding portion.

Since the welding area 30 includes the first portion 31 and may also include other portions, the ratio L1/L represents the proportion of the first portion 31 in the welding area 30. Since it is easier to obtain good welding quality for the first portion 31, increasing this proportion can improve the welding quality of the welding area 30. Therefore, by having the ratio L1/L greater than or equal to 70%, the welding quality of the welding area 30 can be improved and the risk of welding through or false welding of the tab can be reduced.

Optionally, the ratio L1/L of the maximum radial length L1 of the first portion 31 in the radial direction of the cylindrical wound structure to the maximum radial length L of the welding area 30 in the radial direction of the cylindrical wound structure satisfies: L1/L ≥ 90%. For example, L1/L is 90%, 95%, 98%, or 100%. By further defining the ratio L1/L to be greater than or equal to 90%, the welding quality of the welding area 30 can be further improved and the risk of welding through or false welding of the tab can be effectively reduced.

Referring to FIG. 6, in some embodiments, a minimum distance d between the winding start end WS of the current collector substrate 11 in the winding direction wd and the second tab 132 satisfies: d ≤ 1200 mm. The second tab 132 is defined as the tab that is welded to the conductive members 21 and 22 and is closest to the winding start end WS among the plurality of tabs 13. The second tab 132 here is located on a side of the first tab 131 away from the winding start end WS, whereas in some other embodiments, the second tab 132 may alternatively be the first tab 131, that is, the first tab of the electrode sheet is welded to the conductive members 21 and 22.

The minimum distance d here cannot be easily measured when the electrode sheet is in a wound state. The value of the minimum distance d can be obtained by measuring the electrode sheet in a flattened state. At this time, the winding direction wd is equivalent to being flattened together with the electrode sheet into a direction parallel to the length direction of the electrode sheet. Since the second tab 132 is welded to the conductive members 21 and 22 and is closest to the winding start end WS, the minimum distance d between the second tab 132 and the winding start end WS can indicate the range of the tab that is directly connected to the conductive members 21 and 22 through the welding area 30.

The charge on the electrode sheet flows to the conductive members through the welding area between the plurality of tabs and the conductive members, and the charge on the portion of the electrode sheet between the second tab 132 and the winding start end flows more toward the second tab 132, making the second tab 132 more susceptible to overcurrent. By having the minimum distance d less than or equal to 1200 mm, the range of the tab that is directly connected to the conductive members 21 and 22 through the welding area 30 can be increased, and the risk of overcurrent in the second tab 132 can be reduced, thereby minimizing overheating of the tab, which affects the properties of the chemical substances in the electrode assembly 10.

Optionally, the minimum distance d satisfies: d ≤ 800 mm. For example, d is equal to 800 mm, 680 mm, 540 mm, 500 mm, etc. By further defining the optional range for the minimum distance d, the range of the tab that is directly connected to the conductive members 21 and 22 through the welding area 30 can be increased to a greater extent, and the risk of overcurrent in the first tab 131 can be further reduced, thereby more effectively preventing overheating of the tab, which affects the properties of the chemical substances in the electrode assembly 10.

Referring to FIG. 7, in some embodiments, in the extension direction of the winding axis CL, the maximum value Hmax of the depth H of the welding area 30 and the thickness t of the conductive members 21 and 22 satisfy: 1.5*t ≤ Hmax ≤ 1.9*t. When the conductive members 21 and 22 are welded to the stacked tabs, a weld pool extending from the surface of the conductive members 21 and 22 toward one side of the tabs is formed. Depending on factors such as the power used during welding and the overlap thickness, the ratio between the depth of the welding area 30 (i.e., the weld pool) and the thickness of the conductive members 21 and 22 can meet a certain numerical range.

Here, the depth H of the welding area 30 can be measured with reference to the surface of the conductive members 21 and 22 away from the electrode assembly. For a weld pool at a certain position, the distance from the deepest position of the weld pool to this surface of the conductive members in the extension direction of the winding axis CL is the depth of the weld pool. The maximum value Hmax and the minimum value Hmin of the depth of the welding area 30 are the maximum value and the minimum value of the distance from the deepest position of various portions of the entire welding area 30 to this surface of the conductive members in the extension direction of the winding axis CL.

For the maximum value Hmax of the depth of the welding area 30, if the ratio of it to the thickness t of the conductive members 21 and 22 is too large, the risk of welding through of the tab increases, wheras if the ratio is too small, the risk of false welding of the tab increases. Therefore, by setting a specific range for the ratio of the maximum value Hmax of the depth of the welding area 30 to the thickness t of the conductive members 21 and 22, the risk of welding through and false welding of the tab can be minimized.

Optionally, in the extension direction of the winding axis CL, the maximum value Hmax of the depth H of the welding area 30 and the thickness t of the conductive members 21 and 22 satisfy: $1.6*t \leq Hmax \leq 1.8*t$. For example, Hmax is $1.6*t$, $1.65*t$, $1.7*t$, $1.8*t$, etc. By further defining an optional range for the ratio of the maximum value Hmax of the depth of the welding area 30 to the thickness t of the conductive members 21 and 22, the risk of welding through and false welding of the tab can be effectively reduced.

In some embodiments, in the extension direction of the winding axis CL, the minimum value Hmin of the depth H of the welding area 30 and the thickness t of the conductive members 21 and 22 satisfy: $1.1*t \leq Hmin \leq 1.5*t$. For the minimum value Hmin of the depth of the welding area 30, if the ratio of it to the thickness t of the conductive members 21 and 22 is too large, the risk of welding through of the tab increases, whereas if the ratio is too small, the risk of false welding of the tab increases. Therefore, by setting a specific range for the ratio of the minimum value Hmin of the depth of the welding area 30 to the thickness t of the conductive members 21 and 22, the risk of welding through and false welding of the tab can be minimized.

Optionally, in the extension direction of the winding axis CL, the minimum value Hmin of the depth H of the welding area 30 and the thickness t of the conductive members 21 and 22 satisfy: $1.2*t \leq Hmin \leq 1.4*t$. For example, Hmin is $1.2*t$, $1.25*t$, $1.3*t$, $1.4*t$, etc. By further defining an optional range for the ratio of the minimum value Hmin of the depth of the welding area 30 to the thickness t of the conductive members 21 and 22, the risk of welding through and false welding of the tab can be effectively reduced.

The difference between the maximum value Hmax and the minimum value Hmin of the depth H of the welding area 30 can indicate the depth variation range of the welding area 30. If the difference is too large, it means that the depth of the welding area 30 varies greatly, which may increase the risk of local welding through or false welding. If the difference is too small, it means that the depth of the welding area 30 is relatively uniform. Considering the difference in the thickness of the tab stack, the risk of local welding through or false welding increases at the position where the stack thickness is thin or thick.

Therefore, in some embodiments, in the extension direction of the winding axis CL, the difference (Hmax-Hmin) between the maximum value Hmax and the minimum value Hmin of the depth H of the welding area 30 and the thickness t of the conductive members 21 and 22 satisfy: $0.2*t \leq (Hmax-Hmin) \leq 0.8*t$, which helps to reduce the risk of local welding through or false welding of the tab.

Optionally, in the extension direction of the winding axis CL, the difference (Hmax-Hmin) between the maximum value Hmax and the minimum value Hmin of the depth H of the welding area 30 and the thickness t of the conductive members 21 and 22 satisfy: $0.3*t \leq$ (Hmax-Hmin) $\leq 0.6*t$. For example, (Hmax-Hmin) is $0.3*t$, $0.4*t$, $0.5*t$, $0.6*t$, etc. By further defining an optional range for the ratio of the difference (Hmax-Hmin) to the thickness t, the risk of local welding through or false welding of the tab can be further reduced.

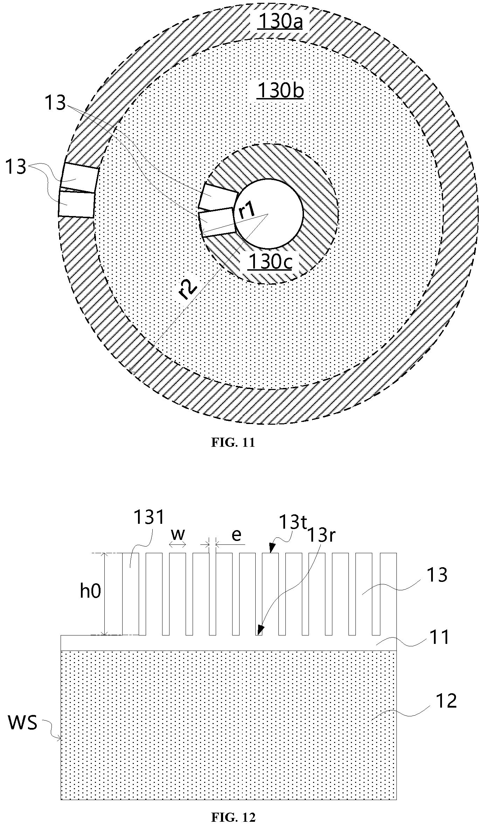

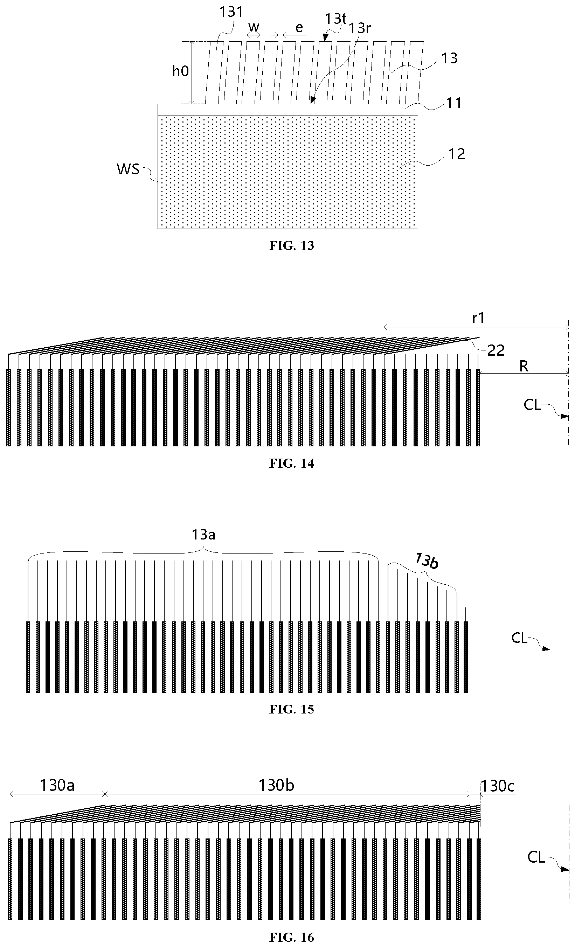

FIG. 11 is a schematic diagram of adjacent tabs overlapping in different tab stack areas in a battery cell according to some embodiments of the present disclosure. FIGS. 12 and 13 are respectively schematic diagrams showing the dimensions of tabs of different shapes connected to the electrode sheets in a battery cell according to some embodiments of the present disclosure. Referring to FIG. 11, the curvature of the electrode sheet winding turn at different radial positions of the wound structure 100 varies with the radius. The smaller the radius, the greater the curvature of the electrode sheet winding turn.

The number of tab stack layers mentioned above refers to the number of tab stack layers connected by different electrode sheet winding turns, and considering the possibility that two or more adjacent tabs connected by the same electrode sheet winding turn may overlap with each other, in the case where the number of tab stack layers in the second tab stack area 130a is the same in the direction close to the winding axis CL, since the degree of overlap of adjacent tabs is higher at a position closer to the winding axis, the thickness of the tab stack increases in the second tab stack area 130a in the direction close to the winding axis.

In FIG. 11, the radius of the electrode sheet winding turn where the tab root of the first tab (i.e., the first tab 131) closest to the winding start end WS is located is r1, and the radius of the electrode sheet electrode sheet winding turn where the tab root of the tab farthest from the winding start end WS is r2. Among the plurality of tabs connected to various electrode sheet winding turns, adjacent tabs may overlap each other after being bent inwards. The greater the curvature of the electrode sheet winding turn, the more adjacent tabs 13 connected thereto overlap, and the thickness of the tab stack increases accordingly.

In FIGS. 12 and 13, the tab 13 may be bent at its root 13r, and the root 13r of the tab 13 may be the position where the tab 13 is cut on the current collector substrate. The width of the top 13t of the tab 13 is defined as w, and the top spacing between the tops 13t of adjacent tabs is defined as e. Referring to FIGS. 12 and 13, in some embodiments, in the winding direction wd, the top spacing e between adjacent tabs among the plurality of tabs 13 satisfies: $e \leq 0.5$ mm.

The larger the top spacing e between adjacent tabs is, the less overlap there is or no overlap occurs after the adjacent tabs are bent inwards, and the smaller the top spacing e is, the more the overlap there is after the adjacent tabs are bent inwards. Therefore, by having the top spacing e between adjacent tabs less than or equal to 0.5 mm, the stacking degree of the tabs can be increased, thereby obtaining a greater tab stack thickness and reducing the risk of welding through of the tab.

Optionally, in the winding direction wd, the top spacing e between adjacent tabs among the plurality of tabs 13 satisfies: e ≤ 0.2 mm. For example, the value of e is 0.2 mm, 0.18 mm, 0.12 mm, 0.06 mm, etc. By further defining the top spacing e between the tabs to be less than or equal to 0.2 mm, the tab stack thickness can be effectively increased and the risk of welding through of the tab can be further reduced.

Considering that rectangular or parallelogram-shaped tabs allows smaller tab top spacing, which is beneficial to increasing the overlap degree of adjacent tabs, referring to FIGS. 12 and 13, in some embodiments, at least part of the plurality of tabs 13 is rectangular or parallelogram-shaped, which can increase the thickness of the tab stack and reduce the risk of welding through of the tab.

Since the curvature of the electrode sheet winding layer is greater as it is closer to the winding axis CL, the connected tabs overlap more, so that the thickness of the tab stack gradually increases from outside to inside. In this way, when welding is performed, the welding power can be gradually increased from outside to inside. Therefore, in some embodiments, the depth of the first portion 31 in the extension direction of the winding axis CL increases toward the direction close to the winding axis CL. The welding area 30 with a depth increasing progressively from outside to inside can improve the welding quality of the welding area 30.

For the embodiment in which the welding area 30 also includes a second portion 32 located in the first tab stack area 130a, considering that the number of tab stack layers in the first tab stack area 130a is relatively small and the depth of the weld pool is relatively small without welding through, the welding power used in welding in the first tab stack area 130a is made lower than the welding power used in welding in the second tab stack area 130b. Therefore, in some embodiments, the depth of the first portion 31 in the extension direction of the winding axis CL is made smaller than the depth of the second portion 32, thereby improving the welding quality of the second portion 32 of the first tab stack area 130a and reducing the risk of welding through of the tab.

FIG. 14 is a schematic diagram showing the dimensions of a bent tab and a central hole in a battery cell according to some embodiments of the present disclosure. Referring to FIGS. 5, 9, 12, 13, and 14, in some embodiments, the wound structure 100 is a cylindrical wound structure having a central hole 110. The minimum distance r1 between the winding axis CL and the tab root of the first tab 131 satisfies: $r1 \geq h0 + 0.8 \times R$, where h0 is the height of the first tab 131 in an unbent state in the extension direction of the winding axis CL, and R is the radius of the section of the central hole 110 at the end portion of the wound structure 100.

In the winding direction wd, the first tab 131 is closest to the winding start end WS of the current collector substrate 11. When the first tab 131 is bent inwards, it is more likely to cover or cover a larger part of the central hole 110 than the tab connected to the electrode sheet winding turn with a larger radius. By having the minimum distance r1 greater than or equal to the sum of the height h0 of the first tab 131 and 0.8 times the radius R of the central hole 110, which is equivalent to the first tab 131 closest to the winding axis CL covering no more than 20% of the radius of the central hole 110 after being bent from outside to inside, the obstruction of the central hole 110 after the tab is bent is reduced to avoid affecting the injection of electrolyte, and the risk of short circuit caused by the tab being inserted downwards or torn during injection is reduced.

Optionally, the minimum distance r1 between the winding axis CL and the tab root of the first tab 131 satisfies: $r1 \geq h0 + R$. The minimum distance r1 is greater than or equal to the sum of the height h0 of the first tab 131 and the radius R of the central hole 110, which is equivalent to the first tab 131 closest to the winding axis CL not covering the central hole 110 after being bent from outside to inside, thereby more effectively avoiding the influence of obstruction of the central hole 110 by the tab on electrolyte injection.

FIG. 15 is a schematic diagram showing the height of tabs in an unbent state in a battery cell according to some other embodiments of the present disclosure. FIG. 16 is a schematic sectional diagram of a plurality of tab stack areas after the tabs in FIG. 15 are bent toward the central hole. Referring to FIGS. 15 and 16, in some embodiments, the plurality of tabs 13 include a first tab group 13a and a second tab group 13b. A plurality of electrode sheet winding turns where the first tab group 13a is located are located outward of the at least one electrode sheet winding turn where the second tab group 13b is located.

In the extension direction of the winding axis CL, the minimum height h1 of the first tab group 13a in the unbent state is greater than the maximum height h2 of the second tab group 13b in the unbent state. By having the maximum height h2 of the second tab group 13b located inward of the first tab group 13a smaller than the minimum height h1 of the first tab group 13a, the first tab 131 connected to the welding area 30 can be made closer to the winding start end WS, which can reduce the risk of overcurrent in the first tab 131. In addition, the smaller tab height of the first tab group 13a can reduce or avoid covering of the central hole 110, thereby effectively avoiding the influence of obstruction of the central hole 110 by the tab on electrolyte injection.

Referring to FIGS. 15 and 16, the second tab group 13b includes the first tab 131, and in the extension direction of the winding axis CL, the height h2 of the second tab group 13b in the unbent state decreases progressively toward a direction close to the winding axis CL. In FIG. 15, the height of the tabs of the second tab group 13b gradually decreases in the direction close to the winding axis CL, so that the first tab 131 in FIG. 16 is closer to the winding axis CL, thereby expanding the range of the second tab stack area 130b.

By decreasing progressively the height of various turns of tabs of the first tab group 13a from outside to inside, the second tab stack area 130b can be extended more toward the winding axis CL, thereby increasing the range of the second tab stack area 130b, which increases the size of the first portion 31 of the welding area 30 in the second tab stack area 130b, improves the welding quality of the welding area 30, and reduces the risk of welding through or false welding of the tab.

Based on the various aforementioned embodiments of the battery cell, the present disclosure further provides an embodiment of a battery using the battery cell according to the aforementioned embodiments. The battery includes the battery cell of any of the aforementioned embodiments. The battery using the battery cell of the aforementioned embodiments can achieve better use safety.

In an aspect of the present disclosure, an electrical device is provided, including the battery as described above. The electrical device using the battery as described above can achieve better use safety.

While the present disclosure has been described with reference to the preferred embodiments, various modifications may be made and components therein may be replaced with equivalents without departing from the scope of the present disclosure. In particular, the technical features mentioned in the various examples can be combined in any manner as long as there is no structural conflict. The present disclosure is not limited to the specific embodiments disclosed herein, but rather includes all technical solutions falling within the scope of the claims.

**Claims**

1. A battery cell (40), comprising:

   an electrode assembly (10) comprising a plurality of electrode sheets (10a, 10b) and separators (10c) positioned between adjacent electrode sheets (10a, 10b) having opposite polarities among the plurality of electrode sheets (10a, 10b), the plurality of electrode sheets (10a, 10b) and the separators (10c) being wound in a winding direction (wd) and forming a wound structure (100), wherein at least one of the plurality of electrode sheets (10a, 10b) comprises a current collector substrate (11) and a plurality of tabs (13), the plurality of tabs (13) are connected to at least one side edge of the current collector substrate (11) extending in the winding direction (wd), and arranged at intervals in the winding direction (wd), and at least part of the plurality of tabs (13) is bent toward a direction close to a winding axis (CL) of the wound structure (100), and forms a tab stack structure (130)

   at an end portion of the wound structure (100);
   a shell (4A) having a chamber for accommodating the electrode assembly (10);
   an electrode terminal (42) provided on a wall portion of the shell (4A); and
   conductive members (21, 22) welded to the tab stack structure (130) and electrically connected to the electrode terminal (42).

2. The battery cell (40) according to claim 1, wherein the tab stack structure (130) comprises a first tab stack area (130a) and a second tab stack area (130b) arranged from outside to inside in the direction close to the winding axis (CL), a number of the tab stack layers in the first tab stack area (130a) increases in the direction close to the winding axis (CL), a number of the tab stack layers in the second tab stack area (130b) is the same in the direction close to the winding axis (CL), and at least a part of a welding area (30) between the conductive members (21, 22) and the tab stack structure (130) is located in the second tab stack area (130b).

3. The battery cell (40) according to claim 2, wherein the welding area (30) comprises a first portion located in the second tab stack area (130b) and a second portion (32) located in the first tab stack area (130a).

4. The battery cell (40) according to claim 2 or 3, wherein the tab stack structure (130) further comprises a third tab stack area (130c) located on a side of the second tab stack area (130b) adjacent to the winding axis (CL), and the welding area (30) further comprises a third portion (33) located in the third tab stack area (130c).

5. The battery cell (40) according to any one of claims 2 to 4, wherein a ratio S1/S of an area S1 of the first portion (31) to an area S of the welding area (30) satisfies: $S1/S \geq 70\%$.

6. The battery cell (40) according to claim 5, wherein the ratio S1/S of the area S1 of the first portion (31) to the area S of the welding area (30) satisfies: $S1/S \geq 90\%$.

7. The battery cell (40) according to any one of claims 2 to 6, wherein the wound structure (100) is a cylindrical wound structure, and a ratio L1/L of a maximum radial length L1 of the first portion (31) in a radial direction of the cylindrical wound structure to a maximum radial length L of the welding area (30) in the radial direction of the cylindrical wound structure satisfies: $L1/L \geq 70\%$.

8. The battery cell (40) according to claim 7, wherein the ratio L1/L of the maximum radial length L1 of the first portion (31) in the radial direction of the cylindrical wound structure to the maximum radial length L of the welding area (30) in the radial direction of the cylindrical wound structure satisfies: L1/L ≥ 90%.

9. The battery cell (40) according to any one of claims 1 to 8, wherein a minimum distance d between a winding start end (WS) of the current collector substrate (11) in the winding direction (wd) and a second tab (132) satisfies: d ≤ 1200 mm;
wherein the second tab (132) is defined as the tab that is welded to the conductive members (21, 22) and is closest to the winding start end (WS) among the plurality of tabs (13).

10. The battery cell (40) according to claim 9, wherein the minimum distance d satisfies: d ≤ 800 mm.

11. The battery cell (40) according to any one of claims 1 to 10, wherein in an extension direction of the winding axis (CL), a maximum value Hmax of a depth H of the welding area (30) between the conductive members (21, 22) and the tab stack structure (130) and a thickness t of the conductive members (21, 22) satisfy: 1.5*t ≤ Hmax ≤ 1.9*t.

12. The battery cell (40) according to claim 11, wherein in the extension direction of the winding axis (CL), the maximum value Hmax of the depth H of the welding area (30) and the thickness t of the conductive members (21, 22) satisfy: 1.6*t ≤ Hmax ≤ 1.8*t.

13. The battery cell (40) according to any one of claims 1 to 12, wherein in the extension direction of the winding axis (CL), a minimum value Hmin of the depth H of the welding area (30) between the conductive members (21, 22) and the tab stack structure (130) and the thickness t of the conductive members (21, 22) satisfy: 1.1*t ≤ Hmin ≤ 1.5*t.

14. The battery cell (40) according to claim 13, wherein in the extension direction of the winding axis (CL), the minimum value Hmin of the depth H of the welding area (30) and the thickness t of the conductive members (21, 22) satisfy: 1.2*t ≤ Hmin ≤ 1.4*t.

15. The battery cell (40) according to any one of claims 1 to 14, wherein in the extension direction of the winding axis (CL), a difference (Hmax-Hmin) between the maximum value Hmax and the minimum value Hmin of the depth H of the welding area (30) between the conductive members (21, 22) and the tab stack structure (130) and the thickness t of the conductive members (21, 22) satisfy: 0.2*t ≤ (Hmax-Hmin) ≤ 0.8*t.

16. The battery cell (40) according to claim 15, wherein in the extension direction of the winding axis (CL), the difference (Hmax-Hmin) between the maximum value Hmax and the minimum value Hmin of the depth H of the welding area (30) and the thickness t of the conductive members (21, 22) satisfy: 0.3*t ≤ (Hmax-Hmin) ≤ 0.6*t.

17. The battery cell (40) according to any one of claims 1 to 16, wherein in the winding direction (wd), a top spacing e between adjacent tabs among the plurality of tabs (13) satisfies: e ≤ 0.5 mm.

18. The battery cell (40) according to claim 17, wherein in the winding direction (wd), the top spacing e between adjacent tabs among the plurality of tabs (13) satisfies: e ≤ 0.2 mm.

19. The battery cell (40) according to any one of claims 1 to 18, wherein the welding area (30) between the conductive members (21, 22) and the tab stack structure (130) comprises a first portion located in the second tab stack area (130b), and in the extension direction of the winding axis (CL), a depth of the first portion (31) increases toward the direction close to the winding axis (CL).

20. The battery cell (40) according to any one of claims 1 to 19, wherein the welding area (30) between the conductive members (21, 22) and the tab stack structure (130) comprises a first portion located in the second tab stack area (130b) and a second portion (32) located in the first tab stack area (130a), and in the extension direction of the winding axis (CL), a depth of the first portion (31) is less than a depth of the second portion (32).

21. The battery cell (40) according to any one of claims 1 to 20, wherein at least part of the plurality of tabs (13) is rectangular or parallelogram-shaped.

22. The battery cell (40) according to any one of claims 1 to 21, wherein the wound structure (100) is a cylindrical wound structure, the cylindrical wound structure has a central hole (110), and a minimum distance r1 between the winding axis (CL) and a tab root of a first tab (131) satisfies:

$$r1 \geq h0 + 0.8*R;$$

wherein h0 is a height of the first tab in an unbent state in the extension direction of the winding axis (CL), and R is a radius of a section of the central hole (110) at the end portion of the wound structure (100).

23. The battery cell (40) according to claim 22, wherein the minimum distance r1 between the winding axis (CL) and the tab root of the first tab (131) satisfies: r1 ≥ h0 + R.

**24.** The battery cell (40) according to any one of claims 1 to 23, wherein the plurality of tabs (13) comprise a first tab group (13a) and a second tab group (13b), a plurality of electrode sheet winding turns where the first tab group (13a) is located are located outward of at least one electrode sheet winding turn where the second tab group (13b) is located, and in the extension direction of the winding axis (CL), a minimum height h1 of the first tab group (13a) in an unbent state is greater than a maximum height h2 of the second tab group (13b) in an unbent state.

**25.** The battery cell (40) according to claim 24, wherein the second tab group (13b) comprises the first tab (131), and in the extension direction of the winding axis (CL), the height h2 of the second tab group (13b) in the unbent state decreases progressively toward the direction close to the winding axis (CL).

**26.** The battery cell (40) according to any one of claims 1 to 25, wherein the shell (4A) comprises a case (41) and an end cover (42), the case (41) having an opening (411) at an end, the end cover (42) covering the opening (411), the case (41) comprising a side wall (414) and a bottom wall (413), the side wall (414) surrounding an outer side of the electrode assembly (10), the bottom wall (413) being disposed opposite to the opening (411), and the wall portion of the shell (4A) being either the end cover (42) or the bottom wall (413).

**27.** A battery (50), comprising the battery cell (40) according to any one of claims 1 to 26.

**28.** An electrical device, comprising the battery (50) according to claim 27.

60

50

**FIG. 1**

50

52

51

40

**FIG. 2**

FIG. 3

FIG. 4A

**FIG. 4B**

**FIG. 4C**

FIG. 5

FIG. 6

FIG. 7

130

130a | 130b | 130c

CL

**FIG. 8**

130a

32

31

130b

30

33

110

30

130c

**FIG. 9**

32 | 31 | 33

S2 | S1 | S3

L2 | L1 | L3

L

**FIG. 10**

FIG. 11

FIG. 12

**FIG. 13**

**FIG. 14**

**FIG. 15**

**FIG. 16**

## INTERNATIONAL SEARCH REPORT

| International application No. |
|---|
| **PCT/CN2023/083685** |

**A.   CLASSIFICATION OF SUBJECT MATTER**

H01M 50/536(2021.01)i；  H01M 50/538(2021.01)i

According to International Patent Classification (IPC) or to both national classification and IPC

**B.   FIELDS SEARCHED**

Minimum documentation searched (classification system followed by classification symbols)

IPC： H01M

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT; ISI: 宁德时代, 极耳, 接片, 弯折, 翻折, 叠, 集流盘, 导电件, 焊, tab, bent, overlap, weld, collector

**C.   DOCUMENTS CONSIDERED TO BE RELEVANT**

| Category* | Citation of document, with indication, where appropriate, of the relevant passages | Relevant to claim No. |
|---|---|---|
| X | CN 114824413 A (LG ENERGY SOLUTION LTD.) 29 July 2022 (2022-07-29) description, paragraphs [0032]-[0357], and figures 5-32 | 1-28 |
| X | CN 115706233 A (LG ENERGY SOLUTION LTD.) 17 February 2023 (2023-02-17) description, paragraphs [0033]-[0345], and figures 7-26 | 1-28 |
| X | CN 115117566 A (ZHAOQING XIAOPENG AUTOMOBILE CO., LTD.) 27 September 2022 (2022-09-27) description, paragraphs [0036]-[0053], and figures 1-8 | 1, 21, 26-28 |
| A | CN 115117566 A (ZHAOQING XIAOPENG AUTOMOBILE CO., LTD.) 27 September 2022 (2022-09-27) description, paragraphs [0036]-[0053], and figures 1-8 | 2-20, 22-25 |
| A | CN 115775956 A (BINET（SUZHOU）ENERGY TECHNOLOGY CO., LTD.) 10 March 2023 (2023-03-10) entire document | 1-28 |

☐ Further documents are listed in the continuation of Box C.          ☑ See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **06 September 2023** | **22 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/083685**

| Patent document cited in search report | | | Publication date (day/month/year) | Patent family member(s) | | | Publication date (day/month/year) |
|---|---|---|---|---|---|---|---|
| CN | 114824413 | A | 29 July 2022 | KR | 20220107132 | A | 02 August 2022 |
| | | | | KR | 20220107131 | A | 02 August 2022 |
| | | | | KR | 20220113654 | A | 16 August 2022 |
| | | | | KR | 20220105148 | A | 26 July 2022 |
| | | | | KR | 102446351 | B1 | 22 September 2022 |
| | | | | WO | 2022158864 | A2 | 28 July 2022 |
| | | | | WO | 2022158864 | A3 | 15 September 2022 |
| | | | | KR | 20220105146 | A | 26 July 2022 |
| | | | | KR | 102448987 | B1 | 29 September 2022 |
| | | | | KR | 20220105144 | A | 26 July 2022 |
| | | | | KR | 102448822 | B1 | 29 September 2022 |
| | | | | WO | 2022158863 | A2 | 28 July 2022 |
| | | | | WO | 2022158863 | A3 | 15 September 2022 |
| | | | | KR | 20220105142 | A | 26 July 2022 |
| | | | | KR | 102446797 | B1 | 26 September 2022 |
| | | | | WO | 2022158862 | A2 | 28 July 2022 |
| | | | | WO | 2022158862 | A3 | 15 September 2022 |
| | | | | EP | 4047702 | A1 | 24 August 2022 |
| | | | | KR | 20220123354 | A | 06 September 2022 |
| | | | | WO | 2022158861 | A2 | 28 July 2022 |
| | | | | WO | 2022158861 | A3 | 15 September 2022 |
| | | | | DE | 202022002774 | U1 | 22 May 2023 |
| | | | | WO | 2022158860 | A2 | 28 July 2022 |
| | | | | WO | 2022158860 | A3 | 15 September 2022 |
| | | | | EP | 4044336 | A2 | 17 August 2022 |
| | | | | EP | 4044336 | A3 | 31 August 2022 |
| | | | | WO | 2022158859 | A2 | 28 July 2022 |
| | | | | WO | 2022158859 | A3 | 15 September 2022 |
| | | | | KR | 20220107133 | A | 02 August 2022 |
| | | | | KR | 20220108011 | A | 02 August 2022 |
| | | | | WO | 2022158858 | A2 | 28 July 2022 |
| | | | | WO | 2022158858 | A3 | 15 September 2022 |
| | | | | EP | 4044332 | A2 | 17 August 2022 |
| | | | | EP | 4044332 | A3 | 07 September 2022 |
| | | | | WO | 2022158857 | A2 | 28 July 2022 |
| | | | | WO | 2022158857 | A3 | 15 September 2022 |
| | | | | KR | 20220113329 | A | 12 August 2022 |
| | | | | EP | 4044358 | A2 | 17 August 2022 |
| | | | | EP | 4044358 | A3 | 31 August 2022 |
| | | | | EP | 4044334 | A2 | 17 August 2022 |
| | | | | EP | 4044334 | A3 | 31 August 2022 |
| | | | | KR | 20220105147 | A | 26 July 2022 |
| | | | | KR | 102437061 | B1 | 26 August 2022 |
| | | | | KR | 20220105145 | A | 26 July 2022 |
| | | | | KR | 102448988 | B1 | 29 September 2022 |
| | | | | US | 2022231345 | A1 | 21 July 2022 |
| | | | | KR | 20220105143 | A | 26 July 2022 |
| | | | | KR | 102444337 | B1 | 16 September 2022 |
| | | | | EP | 4047703 | A2 | 24 August 2022 |
| | | | | EP | 4047703 | A3 | 07 September 2022 |

Form PCT/ISA/210 (patent family annex) (July 2022)

**INTERNATIONAL SEARCH REPORT**
Information on patent family members

International application No.

**PCT/CN2023/083685**

| Patent document cited in search report | | | Publication date (day/month/year) | Patent family member(s) | | | Publication date (day/month/year) |
|---|---|---|---|---|---|---|---|
| | | | | KR | 20220105141 | A | 26 July 2022 |
| | | | | KR | 102438158 | B1 | 30 August 2022 |
| | | | | KR | 20220108012 | A | 02 August 2022 |
| | | | | EP | 4047725 | A2 | 24 August 2022 |
| | | | | EP | 4047725 | A3 | 31 August 2022 |
| CN | 115706233 | A | 17 February 2023 | WO | 2023014018 | A1 | 09 February 2023 |
| | | | | CN | 218414640 | U | 31 January 2023 |
| CN | 115117566 | A | 27 September 2022 | None | | | |
| CN | 115775956 | A | 10 March 2023 | None | | | |

Form PCT/ISA/210 (patent family annex) (July 2022)